# EUROPÄISCHE PATENTANMELDUNG

(11) **EP 1 516 790 A1**
(43) Veröffentlichungstag der Anmeldung: **23.03.2005**
(21) Anmeldenummer: 03020974.6
(22) Anmeldetag: 16.09.2003
(51) Int. Cl.: B60R 25/00, G06K 19/07, G08G 1/017

(54) **Kennzeichnungsvorrichtung für wertvolle Güter und entsprechendes Kennzeichnungsverfahren**

(71) Anmelder: SIEMENS AKTIENGESELLSCHAFT, 80333 München (DE)
(72) Erfinder: Hartig, Michael, 80801 München (DE)

(57) **Zusammenfassung**

Wertvolle Güter und insbesondere Fahrzeuge sollen sicher gekennzeichnet werden können. Dazu wird eine Kennzeichnungsvorrichtung bzw. ein Siegel (1) vorgeschlagen, in dem neben einer reinen Identifikationsnummer auch Informationen über mindestens eine physikalische Eigenschaft des Guts speicherbar sind. Damit kann das Siegel eindeutig dem gekennzeichneten Gut zugeordnet werden. Zur Verifikation der im Siegel gespeicherten Daten können diese auch in einer zentralen Datenbank hinterlegt werden. Die Daten sind beispielsweise zur Verifikation aus dem Siegel (1) durch einen Transponder (2, 3, 4) berührungslos auslesbar. Damit ist eine automatisierte Erfassung möglich.

## Beschreibung

Die vorliegende Erfindung betrifft eine Kennzeichnungsvorrichtung für ein Gut, insbesondere ein Fahrzeug, mit einer Trägereinrichtung, die an dem Gut befestigbar ist, zum Tragen von Elektronikkomponenten, einer Speichereinrichtung, die in oder an der Trägereinrichtung angebracht ist, zum Speichern von Daten und einer Übertragungseinrichtung, die in oder an der Trägereinrichtung angebracht ist, zum drahtlosen Ein- und Auslesen von Daten aus der Speichereinrichtung. Darüber hinaus betrifft die vorliegende Erfindung ein entsprechendes Verfahren zum Kennzeichnen eines Guts.

Vielfach besteht der Bedarf, Fahrzeuge und andere wertvolle Güter eindeutig zu kennzeichnen. Kraftfahrzeuge werden üblicherweise mit Nummernschildern ausgestattet, um sie einfach identifizieren zu können. Diese Nummernschilder weisen jedoch den Nachteil auf, dass sie nur sehr geringe Information enthalten, ohne größeren Aufwand manipulierbar und somit zur sicheren Identifikation des Fahrzeugs nur ungenügend geeignet sind.

Darüber hinaus besteht insbesondere an Grenzübergängen der Bedarf, den Verkehr automatisch zu erfassen. Dabei sollen die über die Grenze gebrachten Fahrzeuge und sonstigen wertvollen Güter automatisch eindeutig identifiziert werden können.

Hierzu ist aus der Druckschrift GB 2 227 866 ein automatisches Fahrzeugidentifikationssystem bekannt. Dabei wird eine Identifikationskarte, von der aus eine charakteristische Identifikationsnummer und eine Fahrzeugnummer per Funk oder optisch übertragen werden können, auf einem motorbetriebenen Fahrzeug angebracht. Zum Lesen der Identifikationsnummer und der Fahrzeugnummer von der Identifikationskarte wird ein entsprechender Identifikationskartenleser verwendet. Gleichzeitig wird das Nummernschild des Kraftfahrzeugs optisch erfasst. Beide Signale werden miteinander verglichen und entsprechende Steuervorgänge ausgeführt.

Des Weiteren ist aus dem Dokument WO 99/19170 ein Fahrzeugkennzeichen mit berührungslos lesbarem, elektronischem Datenträger und ein entsprechendes Herstellungsverfahren bekannt. Auf diesem Datenträger sind die Informationen des Nummernschilds gespeichert, damit sie automatisch auslesbar sind. Damit kann eine schnellere Zuordnung des Kraftfahrzeugkennzeichens zu offiziellen Begleitdokumenten eines Fahrzeugs oder anderen Datensätzen erfolgen.

Aufgrund der leichten Manipulierbarkeit des Kraftfahrzeugkennzeichens oder der genannten Identifikationskarte ist es jedoch nicht möglich, eine eindeutige Beziehung des Kennzeichens zu dem Kraftfahrzeug herzustellen.

Die Aufgabe der vorliegenden Erfindung besteht somit darin, eine Kennzeichenvorrichtung vorzuschlagen, mit der eine Verknüpfung zwischen dem Kennzeichen und dem gekennzeichneten Gut auf eindeutige Weise gegeben ist. Darüber hinaus soll ein entsprechendes Verfahren zum Kennzeichnen eines wertvollen Guts angegeben werden.

Erfindungsgemäß wird diese Aufgabe gelöst durch eine Kennzeichnungsvorrichtung für ein Gut, insbesondere ein Fahrzeug, mit einer Trägereinrichtung, die an dem Gut befestigbar ist, zum Tragen von Elektronikkomponenten, einer Speichereinrichtung, die in oder an der Trägereinrichtung angebracht ist, zum Speichern von Daten und einer Übertragungseinrichtung, die in oder an der Trägereinrichtung angebracht ist, zum drahtlosen Ein- und Auslesen von Daten aus der Speichereinrichtung, wobei die in der Speichereinrichtung gespeicherten Daten Informationen über mindestens eine physikalische Eigenschaft, eine Gestalt oder eine Ausstattung des Guts umfassen.

Ferner ist erfindungsgemäß vorgesehen ein Verfahren zum Kennzeichnen eines Guts, insbesondere eines Fahrzeugs, durch Speichern von Daten in einer Speichereinrichtung, die in oder an einer Trägereinrichtung angebracht ist und die drahtlose Datenkommunikation ermöglicht, und Befestigen der Trägereinrichtung an dem Gut, wobei die in der Speichereinrichtung gespeicherten Daten Informationen über mindestens eine physikalische Eigenschaft, eine Gestalt oder eine Ausstattung des Guts umfassen.

Die in der Speichereinrichtung gespeicherten Daten können eine Abbildung des Guts oder eines Teils des Guts umfassen. So ist es beispielsweise möglich, dass ein Bild oder eine entsprechende Bezugsinformation zu einem Bild des Kraftfahrzeugs oder des Motorraums in der Kennzeichnungsvorrichtung abgespeichert ist, so dass durch Laden des entsprechenden Bilds ggf. aus einem zentralen Bildspeicher rasch überprüft werden kann, ob das so gekennzeichnete Fahrzeug auch mit dem registrierten Fahrzeug übereinstimmt.

Die Daten können aber auch indirekt beschreibende oder identifizierende Informationen über das Gut oder einen Teil des Guts, wie z. B. eine Serien- oder Produktionsnummer, enthalten. Indirekt beschreibende Informationen bei Schusswaffen wären auch Bilder oder beschreibende Angaben des Schlagbolzenabdrucks auf Patronenhülsen und/oder der Verfeuerungsspuren auf Projektiloberflächen.

Darüber hinaus können die Daten Sicherheitsinformationen und/oder Berechtigungsinformationen umfassen. Somit ist gewährleistet, dass das Auslesen der Daten aus dem Speicher sicher gestaltet und nur für berechtigte Personen möglich gemacht werden kann.

Vorzugsweise besitzen die Daten in der Speichereinrichtung Bezugsinformationen über eine Beziehung des Guts zu einem externen Objekt, insbesondere einer Person. Damit kann ein wertvolles Gut eindeutig mit einer Person verknüpft werden, so dass beispielsweise nur eine bestimmte Person ein spezielles Gut, z. B. Waffen, an einer Grenze ausführen kann.

Die in der Speichereinrichtung gespeicherten und über die Übertragungseinrichtung zu übertragenden Daten sind optional verschlüsselt. Dies vermindert weiterhin die Gefahr eines unberechtigten Zugriffs. Ferner sollte die Übertragung von einer Leseeinheit, die zum Auslesen der Kennzeichnungsvorrichtung dient, zu einer zentralen Verarbeitungseinheit verschlüsselt erfolgen.

Die erfindungsgemäße Kennzeichnungsvorrichtung kann ferner mehrteilig sein, wobei jedes Teil jeweils eine Träger-, Speicher- und Übertragungseinrichtung umfasst und die zu speichernden Daten auf die mehreren Teile aufgeteilt sind. Durch diese Datensplittung kann ein zusätzliches Maß an Sicherheit gewährleistet werden.

Zur Datenübertragung kann die Übertragungseinrichtung einen passiven Transponder aufweisen. Dieser hat den Vorteil einer berührungslosen Datenübertragung bei gleichzeitigem Verzicht auf eine eigene Energieversorgung im Gegensatz zu einem aktiven Transponder. Alternativ oder zusätzlich zu dem Transpondersystem kann die Kennzeichnungsvorrichtung auch ein Oberwellenfilterelement aufweisen, in dem die notwendigen Daten gespeichert sind, und das ebenfalls berührungslos auslesbar ist.

Vorteilhafterweise besitzt die Trägereinrichtung mindestens eine "Sollbruchstelle", so dass sie beim Ablösen von dem Gut zerstört oder beschädigt wird. Auf diese Weise kann zusätzlich verhindert werden, dass das erfindungsgemäße Kennzeichen unberechtigt von einem Gut auf ein anderes Gut übertragen wird.

Vorzugsweise besteht die Trägereinrichtung außerdem im Wesentlichen aus einem Kunststofffolienmaterial. Dadurch kann die Kennzeichnungsvorrichtung auf nahezu beliebige Oberflächen aufgebracht werden, ist leicht herzustellen und zu handhaben.

Die erfindungsgemäße Kennzeichnungsvorrichtung kann auch eine Kennzeichnungsfläche aufweisen. Diese Kennzeichnungsfläche kann als optische Speichereinrichtung dienen oder zusätzlich zu einem elektronischen Speicher auf der Kennzeichnungsvorrichtung angebracht sein. In diesem Fall ist die Kennzeichnungsfläche an der Oberfläche der Trägereinrichtung angeordnet, damit die Kennzeichnungsvorrichtung optisch, gegebenenfalls automatisch, auslesbar ist. Hierzu kann es günstig sein, wenn die Kennzeichnungsfläche bedruckbar und/oder bestempelbar ist. Auf diese Weise kann beispielsweise auf der Kennzeichnungsfläche ein 2D-Bar-Code und/oder ein Hologramm zur Bereitstellung der Daten bzw. Sicherheitsmerkmale aufgebracht werden.

Vorzugsweise ist die Trägereinrichtung selbstklebend, so dass sie ohne großen Aufwand auf das zu kennzeichnende Gut aufgebracht werden kann.

Die erfindungsgemäße Kennzeichnungsvorrichtung ist günstigerweise in eine PKI- und/oder VPN-Infrastruktur integrierbar. Dadurch kann ein hohes Maß an Datenübertragungssicherheit gewährleistet werden.

Zur Verifikation der Daten in der Kennzeichnungsvorrichtung sollten die in der Speichereinrichtung gespeicherten Daten auch in einem zentralen Datenhaltungssystem abgelegt werden. Dort können Sie dann zum Zwecke des Vergleichs abgerufen werden. Für den Vergleich kann es günstig sein, wenn die Daten mittels Hash-Code eindeutig codiert und verifiziert werden.

Die vorliegende Erfindung wird nun anhand der beigefügten Zeichnungen näher erläutert, in denen zeigen:
- FIG 1: eine Prinzipskizze einer erfindungsgemäßen Kennzeichnungsvorrichtung mit Sende- und Empfangsvorrichtung;
- FIG 2: ein Datenflussdiagramm einer Ausgabestelle für erfindungsgemäße Kennzeichen; und
- FIG 3: ein Datenflussdiagramm zur Verifikation einer erfindungsgemäßen Kennzeichnungsvorrichtung.

Die nachfolgend näher aufgeführten Ausführungsbeispiele stellen bevorzugte Ausführungsformen der vorliegenden Erfindung dar.

Gemäß der vorliegenden Erfindung wird ein Siegel für bewegliche, wertvolle Güter, wie beispielsweise Kraftfahrzeuge, Baumaschinen, Messgeräte, bereitgestellt. Im Folgenden wird die Erfindung jedoch speziell anhand eines Fahrzeugs näher erläutert.

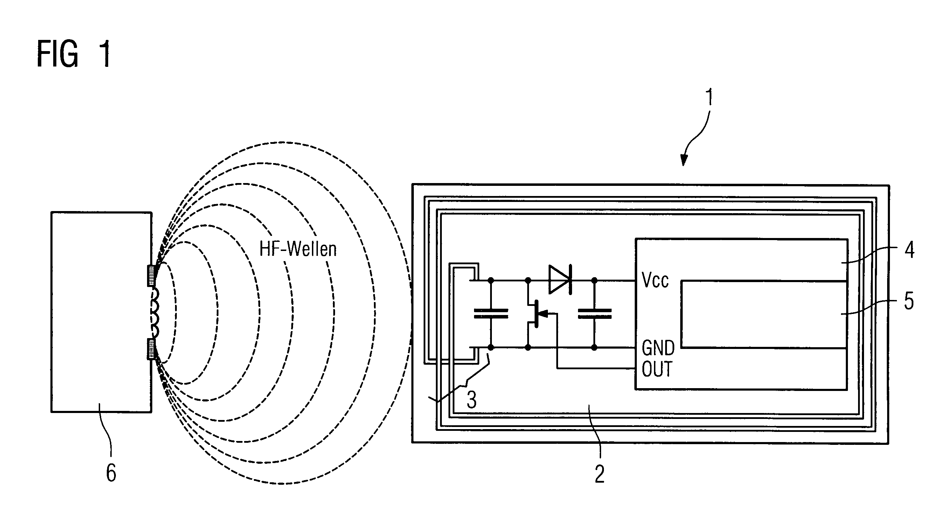

In FIG 1 ist eine derartige Kennzeichnungsvorrichtung 1 schematisch dargestellt. Sie besteht aus einem Träger 2, der aus einer Kunststofffolie gefertigt ist. Auf dem Träger 2 ist eine Antenne 3 für einen Transponder aufgebracht. Die Transponder-Steuerung erfolgt über ein übliches Transponder-Chip 4. Die elektrische Beschaltung zwischen dem Transponder-Chip 4 und der Antenne 3 erfolgt auf bekannte Weise.

Der Transponder-Chip 4 beinhaltet einen oder mehrere Datenspeicher 5, in dem eine Bezugsinformation zu den physikalischen Eigenschaften und Merkmale des Fahrzeugs oder diese selbst gespeichert sind. Derartige Merkmale sind beispielsweise äußerliche Merkmale wie die Anzahl der Türen, die Farbe, das Vorhandensein einer Klimaanlage und dergleichen. Es ist damit möglich, Fahrzeugdaten in beliebiger Tiefe abzuspeichern und gegebenenfalls berührungslos zur Verfügung zu stellen.

Das Einspeichern und Auslesen von Daten erfolgt mit Hilfe einer Sende-/Leseeinrichtung 6, die mit der Kennzeichnungsvorrichtung 1 in Funkverbindung steht. Daher kann die Kennzeichnungsvorrichtung im vorliegenden Fall als Transponder-RFID-Tag bezeichnet werden, wobei RFID für Hochfrequenzidentifikation steht.

Zur Erhöhung der Sicherheit werden die Daten in zwei derartigen Kennzeichnungsvorrichtungen bzw. RFID-Tags (nachfolgend auch Siegel genannt), die unabhängig voneinander sind, gespeichert. Eines dieser Siegel ist beispielsweise auf dem Nummernschild des Kraftfahrzeugs und das andere an der Windschutzscheibe angebracht. Durch dieses Datensplitting und entsprechende Verschlüsselung in zwei Speichern kann erhöhte Fälschungssicherheit gewährleistet werden. In dem oder den jeweiligen Speichern 5 können neben dem Kraftfahrzeugkennzeichen die Fahrgestellnummer und ein Bild, beispielsweise des Motorraums bzw. Innenraums des Fahrzeugs, beispielsweise im JPG-Format, oder ein entsprechender Link auf eine Datenbank abgespeichert sein. Darüber hinaus können noch weitere für die einwandfreie Identifizierung notwendige Daten in dem Speicher vorzugsweise verschlüsselt abgelegt werden. Diese umfassen äußerliche, sogenannte "biometrische" Fahrzeugmerkmale, beispielsweise die Anzahl der Türen, die Farbe, etc., wie sie oben bereits erwähnt wurden. Das Hauptfahrzeugsiegel bzw. -tag wird am Nummernschild des Kraftfahrzeugs vorne befestigt, damit es aus einer Entfernung von ca. 40 cm von einem Leser in der Fahrspurmitte automatisch gelesen werden kann. Das zweite Siegel bzw. Tag wird innen an der Windschutzscheibe angebracht, so dass es von einem anderen Leser manuell oder mit einer Vorrichtung automatisch gelesen werden und alle Daten einschließlich Bild auf einem entfernten Bildschirm angezeigt werden können.

In dem Siegel kann eine Verknüpfung (Link) zu einem Ausweisdokument einer Person abgespeichert sein. Darüber hinaus können auch weitere biometrische Daten dieser Person in dem Siegel abgespeichert sein. Somit ist es möglich, das Fahrzeug einer bestimmten Person eindeutig zuzuordnen. Dies ist von Bedeutung bei Ein- und Ausfuhren an Grenzübergängen gemäß den Carnet-Bestimmungen. Bei den davon betroffenen Gütern, z. B. Laptops, Maschinen, Waffen, Messgeräte, etc., ist es notwendig, dass das eingeführte Gut mit dem ausgeführten Gut identisch ist.

Ein Siegel kann fallweise mit einer PIN-Kennung ausgestattet sein, um bestimmte private Datenbereiche nur mit Einwilligung des Siegelinhabers freizugeben. Die bekannten TAN-Codes können unter Umständen zum Einsatz kommen, um ein Siegel wieder zu erneuern.

Damit das Siegel bzw. Tag nicht ohne weiteres von dem Fahrzeug abgelöst werden kann, weist es "Sollbruchstellen" auf, so dass es bei Ablöseversuchen zerstört wird.

Das Siegel bzw. Tag ist sehr flach ausgestaltet und mit einer selbstklebenden Beschichtung ausgestattet. Falls ein Siegel außen an ein Fahrzeug angebracht werden soll, wo es entsprechenden Umwelteinflüssen ausgesetzt ist, können geeignete Befestigungsmethoden angewandt werden.

Die Oberfläche des Siegels ist bedruckt und/oder bestempelbar. Für den Druck eignet sich beispielsweise ein 2D-Bar-Code.

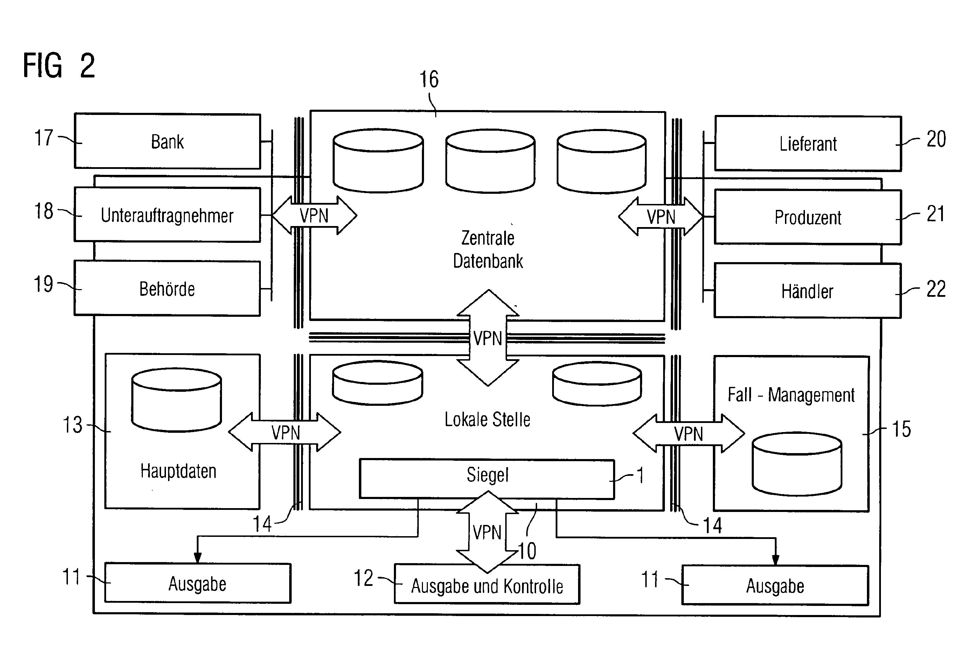

In FIG 2 ist eine Infrastruktur dargestellt, in die das erfindungsgemäße Siegel eingebettet werden kann. Das elektronische Siegel 1, d. h. die erfindungsgemäße Kennzeichnungsvorrichtung, wird von einer lokalen Stelle 10 ausgegeben. Die Ausgabevorgänge sind in FIG 2 mit dem Bezugszeichen 11 gekennzeichnet. Die Ausgabe kann mit einer Kontrolle 12 kombiniert sein. Dementsprechend ist ein bidirektionaler Datenfluss zwischen der Kontrollstelle 12 und der lokalen Stelle 10 notwendig.

Die auf dem Siegel 1 abzuspeichernden Hauptdaten 13 werden der lokalen Stelle über eine VPN-Verbindung (privates Netz) zur Verfügung gestellt. Die Datensicherheit kann hierbei durch eine Firewall 14 erhöhnt werden.

Darüber hinaus kann die lokale Stelle 10 beispielsweise mit einem Polizeirechner verbunden sein, so dass bei der Ausgabe der Siegel 1 das polizeiliche Fall-Management 15 Einfluss nehmen kann.

Zur Verifikation der Echtheit des Siegels 1 sind die Siegeldaten auch in einer zentralen Datenbank 16 abgelegt. Diese zentrale Datenbank 16 kann einer Regierungsbehörde angegliedert sein. Die Daten in der zentralen Datenbank 16 können gegebenenfalls Banken 17, Unterauftragnehmern 18, Behörden 19 sowie Lieferanten 20, Produzenten 21 und Händlern 22 zur Verfügung gestellt werden. Diese Stellen können aber auch ihrerseits Informationen zur Erstellung und Verwaltung der Daten liefern. Für sämtliche Datenverbindungen wird vorzugsweise eine PKI- und VPN-Infrastruktur verwendet.

Im Hinblick auf funktionelle, informationstechnische, physikalische, kommunikative und organisatorische Systemarchitektur werden die folgenden Verfahren und Einrichtungen durch die vorliegende Erfindung eines sicheren Siegels erst sinnvoll und effektiv nutzbar:
- aktive, gemeinschaftliche Informationsfilter beispielsweise zur schärferen Eingrenzung bei der Rasterfahndung
- einheitliches Treiberdesign für alle Kommunikationen
- abstrakte Datenbank und abstraktes Systemdesign
- einheitliches skalierbares Systemdesign bzw. variable Konfiguration der Systemgröße
- VPN-Kommunikationskanäle für kunden- und auftraggebereigene Daten
- analytische Online-Datenverarbeitung OLAP in einem objektorientierten Datenbankmanagementsystem ORDBM und mehrdimensionale Datenspeicher DAS (multidimensional data warehouse) sowie diesbezügliche Softwaremodule
- ein kleines, intrinsisch verteiltes Echtzeit-(Sub)-System für kritische Ausgabeprozesse
- hybride Systemkonfiguration (Dual Use of System) und
- Integration des Fall-Managements beispielsweise der Polizei

Da die Daten in einem zentralen System 6 vorgehalten werden, können virtuelle Berechtigungen, z. B. die Berechtigung der Einfuhr eines Fahrzeugs in ein Land, vergeben werden. Darüber hinaus wäre die Verwendung von sicheren Siegeln nicht nur für Behörden von großer Bedeutung, z. B. hinsichtlich der Logistik landfremder Fahrzeuge und Gefahrengüter, sondern auch für die Leihwagenbranche, um ihre Fahrzeuge zu sichern und zu verwalten.

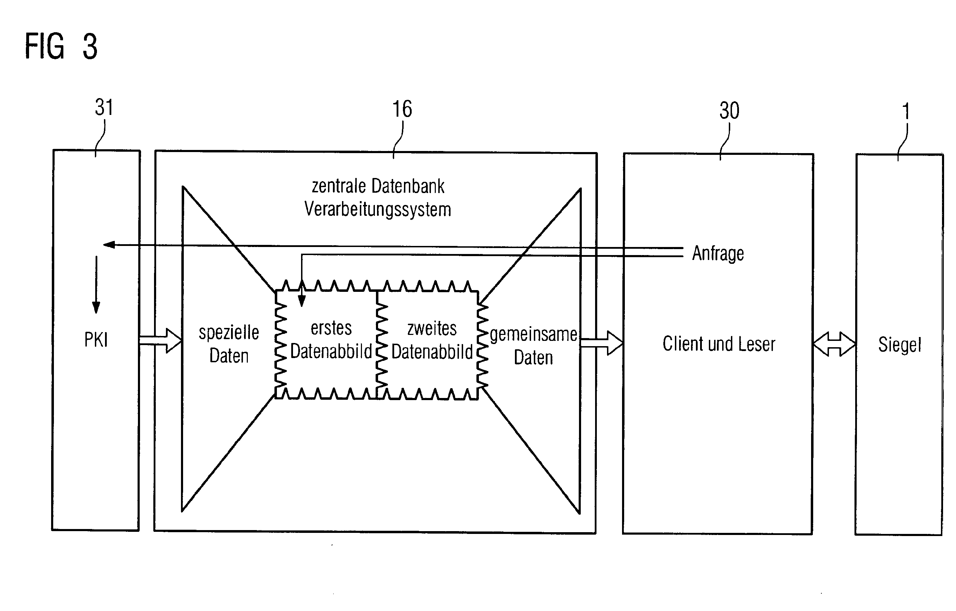

Die Daten des Siegels können gemäße dem Schema von FIG 3 verifiziert werden. Dementsprechend werden die Daten eines Siegels 1 von einem Lesegerät, das in einen Client 30 integriert ist, erfasst. Der Client 30 stellt eine Anfrage über eine PKI-Infrastruktur 31 an die zentrale Datenbank 16. Dort wird ein erstes Datenabbild, das den Daten des Siegels 1 entspricht, mit einem zweiten Datenabbild, das in der zentralen Datenbank 16 hinterlegt ist, verglichen. D. h. die speziellen Daten werden mit den gemeinsam hinterlegten Daten verglichen. Der Client 16 erhält über das Vergleichsergebnis eine entsprechende Antwort in Form eines Zertifikats.

Das Scannen bzw. Erfassen der Daten kann über ein Wireless Lan und Accesspoints über GPRS oder Fahrzeugen und anderen öffentlichen Accesspoints jederzeit und an beliebigen Orten erfolgen. Somit können fahrzeugspezifische Kontrollen vorgenommen werden und Kontrollen in der üblichen Art entfallen.

Da das Siegel aus der Entfernung und berührungslos lesbar ist, können bei vorgeschriebener Fahrspur beispielsweise an einer Grenze alle Daten einschließlich eines Bilds gleichzeitig mit der Anzeige am Terminal über entsprechende Datenübertragungswege für den Abgleich in ein im Hintergrund laufendes zentrales Datenhaltungssystem eingelesen werden. Vorzugsweise kann die im Hintergrund laufende Softwareanwendung leicht in eine bestehende Client-Server-Infrastruktur eingebunden werden. Außer den Lesern und Clients ist damit keine weitere Hardware notwendig. Die unter Umständen speziell angepassten Leser sind entweder stationär in der Straße oder an der Straße (Grenze oder grenzähnliche Straßenanlagen) angebracht, oder es werden drahtgebundene oder drahtlose Hand-Held-Terminals eingesetzt.

Bei der Verifikation der Daten des Siegels ist es zweckmäßig, sogenannte Hash-Code-Mechanismen zu verwenden. Dadurch kann der Vergleich von Datenabbildern sehr rasch vollzogen werden.

Folgende Sicherheitsprinzipien sollten durchführbar oder berücksichtigbar sein:
- "Privacy": Aus Datenschutzgründen wird eine Verschlüsselung durchgeführt.
- "Non-repudiation": Die Daten stammen tatsächlich von dem angegebenen Autor.
- "Authentication": Die Daten stammen von der angegebenen Quelle.
- "Integrity": Die Daten sind nicht verfälscht.
- "Verification": Die Daten sind gemäß einer Vergleichsoperation echt.

Speziell können hinsichtlich der Sicherheit bei der Datenübertragung folgende Verfahren angewandt werden:
- asymmetrische Verschlüsselung
- digitale Unterschrift
- Zertifikate
- PIN- und TAN-Codes
- Dateisystem-Sicherheit (z. B. Verschlüsselung auf der Platte)
- Hash-Code-Mechanismen bei der Erzeugung von Datenschlüsseln

Hinsichtlich der sicheren Gestaltung des Siegels können unter anderen folgende Verfahren eingesetzt werden:
- Fotolamination
- Unterschriftsstreifen
- Hologramme
- Mikrodruckverfahren
- Lasergravur
- Reliefbildung
- Sicherheitsmuster

Aber auch die Daten selbst sollten eine gewisse Sicherheit dahingehend gewährleisten, dass sie das gekennzeichnete Gut oder das Objekt, auf das sie bezogen werden, auch tatsächlich betreffen. Hierzu können beispielsweise biometrische Daten einer als Bürgen fungierenden Person, wie etwa die Unterschrift, der Fingerabdruck, die Stimme, die Handgeometrie, die Netzhaut des Auges und Gesichtsmerkmale erfasst werden.

Die obigen Ausführungsbeispiele wurden stets in Zusammenhang mit einem Transponder zur Datenübertragung geschildert. Anstelle des Transponders oder zusätzlich zu diesem können aber auch Oberflächenwellen-Elemente auf bzw. an dem Siegel angebracht werden. Auch sie lassen sich berührungslos auslesen, so dass eine automatische Datenerfassung und Verifikation möglich ist.

## Patentansprüche

1. Kennzeichnungsvorrichtung für ein Gut, insbesondere ein Fahrzeug, mit
- einer Trägereinrichtung (2), die an dem Gut befestigbar ist, zum Tragen von Elektronikkomponenten,
- einer Speichereinrichtung (5), die in oder an der Trägereinrichtung (2) angebracht ist, zum Speichern von Daten und
- einer Übertragungseinrichtung (3, 4), die in oder an der Trägereinrichtung (2) angebracht ist, zum drahtlosen Einund Auslesen von Daten aus der Speichereinrichtung (5),
**dadurch gekennzeichnet, dass**
- die in der Speichereinrichtung (5) gespeicherten Daten Informationen über mindestens eine physikalische Eigenschaft, eine Gestalt oder eine Ausstattung des Guts umfassen.

2. Kennzeichnungsvorrichtung nach Anspruch 1, wobei die Daten eine Abbildung des Guts oder eines Teils des Guts umfassen.

3. Kennzeichnungsvorrichtung nach Anspruch 1 oder 2, wobei die Daten indirekt beschreibende oder identifizierende Informationen über das Gut oder einen Teil des Guts enthalten.

4. Kennzeichnungsvorrichtung nach einem der vorhergehenden Ansprüche, wobei die Daten Sicherheitsinformationen und/oder Berechtigungsinformationen umfassen.

5. Kennzeichnungsvorrichtung nach einem der vorhergehenden Ansprüche, wobei die Daten Bezugsinformationen über eine Beziehung des Guts zu einem externen Objekt, insbesondere zu einer Person, umfassen.

6. Kennzeichnungsvorrichtung nach einem der vorhergehenden Ansprüche, wobei die über die Übertragungseinrichtung zu übertragenden Daten verschlüsselt sind.

7. Kennzeichnungsvorrichtung nach einem der vorhergehenden Ansprüche, wobei die Kennzeichnungsvorrichtung mehrteilig ist, jedes Teil jeweils eine Träger-, Speicher- und Übertragungseinrichtung umfasst und die zu speichernden Daten auf die mehreren Teile aufgeteilt sind.

8. Kennzeichnungsvorrichtung nach einem der vorhergehenden Ansprüche, wobei die Übertragungseinrichtung (3, 4) einen passiven Transponder umfasst.

9. Kennzeichnungsvorrichtung nach einem der vorhergehenden Ansprüche, wobei die Trägereinrichtung (2) mindestens eine Sollbruchstelle aufweist, so dass sie beim Ablösen von dem Gut zerstört oder beschädigt wird.

10. Kennzeichnungsvorrichtung nach einem der vorhergehenden Ansprüche, wobei die Trägereinrichtung (2) im Wesentlichen aus einem Kunststofffolienmaterial besteht.

11. Kennzeichnungsvorrichtung nach einem der vorhergehenden Ansprüche, die eine Kennzeichnungsfläche aufweist, welche an der Oberfläche der Trägereinrichtung (2) angeordnet ist, um die Kennzeichnungsvorrichtung optisch zu kennzeichnen.

12. Kennzeichnungsvorrichtung nach Anspruch 11, wobei die Kennzeichnungsfläche bedruckbar und/oder bestempelbar ist.

13. Kennzeichnungsvorrichtung nach Anspruch 11 oder 12, wobei auf der Kennzeichnungsfläche ein 2D-Bar-Code und/oder ein Hologramm aufgebracht ist.

14. Kennzeichnungsvorrichtung nach einem der vorhergehenden Ansprüche, wobei die Trägereinrichtung (2) selbstklebend ist.

15. Kennzeichnungsvorrichtung nach einem der vorhergehenden Ansprüche, die in eine PKI- und/oder VPN-Infrastruktur integrierbar ist.

16. Verfahren zum Kennzeichnen eines Guts, insbesondere eines Fahrzeugs, durch
- Speichern von Daten des Guts in einer Speichereinrichtung (5), die in oder an einer Trägereinrichtung (2) angebracht ist und die drahtlose Datenkommunikation ermöglicht, und
- Befestigen der Trägereinrichtung an dem Gut,
**dadurch gekennzeichnet, dass**
- die in der Speichereinrichtung (5) gespeicherten Daten Informationen über mindestens eine physikalische Eigenschaft, eine Gestalt oder eine Ausstattung des Guts umfassen.

17. Verfahren nach Anspruch 16, wobei die Daten eine Abbildung des Guts oder eines Teils des Guts umfassen.

18. Verfahren nach Anspruch 16 oder 17, wobei die Daten indirekt beschreibende oder identifizierende Informationen über das Gut oder einen Teil des Guts enthalten.

19. Verfahren nach einem der Ansprüche 16 bis 18, wobei die Daten Sicherheitsinformationen und/oder Berechtigungsinformationen umfassen.

20. Verfahren nach einem der Ansprüche 16 bis 19, wobei die Daten Bezugsinformationen über eine Beziehung des Guts zu einem externen Objekt, insbesondere zu einer Person, umfassen.

21. Verfahren nach einem der Ansprüche 16 bis 20, wobei die Daten verschlüsselt übertragen werden.

22. Verfahren nach einem der Ansprüche 16 bis 21, wobei die in der Speichereinrichtung gespeicherten Daten auch in einem zentralen Datenhaltungssystem (16) abgelegt werden.
